(19) Europäisches Patentamt
European Patent Office
Office européen des brevets

(11) EP 3 235 050 B1

(12) # FASCICULE DE BREVET EUROPEEN

(45) Date de publication et mention de la délivrance du brevet:
**21.11.2018 Bulletin 2018/47**

(21) Numéro de dépôt: **15817989.5**

(22) Date de dépôt: **10.12.2015**

(51) Int Cl.:
***H01M 10/625*** (2014.01) ***B60L 11/18*** (2006.01)
***H01M 10/63*** (2014.01) ***H01M 10/663*** (2014.01)
***H01M 10/6571*** (2014.01) ***H01M 10/61*** (2014.01)
***H01M 10/651*** (2014.01) ***H01M 10/615*** (2014.01)
***B60L 11/14*** (2006.01)

(86) Numéro de dépôt international:
**PCT/FR2015/053411**

(87) Numéro de publication internationale:
**WO 2016/097541 (23.06.2016 Gazette 2016/25)**

(54) **PROCÉDÉ DE GESTION D'UN GROUPE MOTOPROPULSEUR HYBRIDE D'UN VÉHICULE AUTOMOBILE**

VERFAHREN ZUR VERWALTUNG EINES HYBRIDANTRIEBSTRANGS EINES KRAFTFAHRZEUGS

METHOD FOR MANAGING A HYBRID POWER TRAIN OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2014 FR 1462487**

(43) Date de publication de la demande:
**25.10.2017 Bulletin 2017/43**

(73) Titulaire: **Renault S.A.S.**
**92100 Boulogne-Billancourt (FR)**

(72) Inventeurs:
- **RECOUVREUR, Philippe**
  **92120 Montrouge (FR)**
- **MARCHAL, Caroline**
  **Paris 75015 (FR)**
- **JEAN, Elise**
  **94230 Cachan (FR)**
- **MARINCAS, Irina**
  **75006 Paris (FR)**

(56) Documents cités:
**EP-A1- 2 366 598**
**EP-A2- 1 065 354**
**GB-A- 2 509 308**
**US-A1- 2010 258 063**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 235 050 B1

## Description

### Domaine technique de l'invention

L'invention concerne le domaine des véhicules automobiles de type hybride, c'est-à-dire à motorisation thermique et électrique.

L'invention a pour objet plus particulièrement un procédé de gestion d'un groupe motopropulseur d'un véhicule automobile comportant un moteur thermique et un moteur électrique relié électriquement à une batterie d'alimentation.

### État de la technique

Dans le domaine des véhicules automobiles hybrides, c'est-à-dire équipés d'un moteur thermique et d'un moteur électrique alimenté par une batterie, et tous deux destinés à la propulsion du véhicule automobile, il est connu que la température de la batterie influe sur les performances de ladite batterie.

Ainsi, lorsque la batterie est froide, on va chercher à la réchauffer pour optimiser ses performances.

Le document EP1065354 décrit un échangeur thermique récupérant de la chaleur perdue par le moteur thermique pour la transférer à la batterie. Il en résulte que la montée en température de la batterie est totalement et passivement asservie à la montée en température du moteur thermique, sans aucun contrôle.

Cependant une telle solution ne prend notamment pas en compte le type de conduite du conducteur et implique un échange thermique constant limité à un apport de calories uniquement lié à la chaleur perdue. GB2509308 décrit un procédé de gestion d'un groupe motopropulseur d'un véhicule automobile comprenant un moteur thermique et une batterie d'alimentation.

### Objet de l'invention

Le but de la présente invention est de proposer une solution qui remédie aux inconvénients listés ci-dessus.

On tend vers ce but notamment en ce que le procédé comporte une étape de pilotage d'un système de chauffage de la batterie d'alimentation en fonction d'au moins une mesure d'une température représentative du fonctionnement du moteur thermique.

En particulier, le moteur thermique étant associé à une première température de fonctionnement optimale et la batterie d'alimentation étant associée à une deuxième température de fonctionnement optimale, l'étape de pilotage est telle qu'elle synchronise la montée en température de la batterie d'alimentation à la montée en température du moteur thermique pour que les première et deuxième températures de fonctionnement optimales soient atteintes en même temps.

Selon une réalisation, le procédé comporte, pour chaque étape de mesure de la température représentative du fonctionnement du moteur thermique, une étape d'élaboration d'une température de consigne, et l'étape de pilotage du système de chauffage comporte une étape d'activation du système de chauffage pour faire tendre la température réelle de la batterie d'alimentation vers la température de consigne élaborée, notamment si la température réelle de la batterie est inférieure à la température de consigne.

Notamment, l'étape de pilotage comporte une étape de mesure de la température courante de la batterie d'alimentation et une étape de détermination d'une puissance de chauffage du système de chauffage à appliquer en fonction de la température de consigne élaborée et de la température courante mesurée de la batterie d'alimentation.

Par exemple, chaque mesure de la température représentative du fonctionnement du moteur thermique inclut de mesurer la température du liquide de refroidissement du moteur thermique.

Selon une réalisation, l'étape de pilotage du système de chauffage de la batterie d'alimentation comporte une étape de prélèvement de calories sur un organe du véhicule automobile producteur de chaleur du fait du fonctionnement du moteur thermique et une étape de restitution d'au moins une partie des calories prélevées à la batterie d'alimentation.

Par exemple, l'étape de prélèvement de calories et l'étape de restitution de ladite au moins une partie des calories utilisent un élément de couplage thermique reliant ledit organe producteur de chaleur à la batterie d'alimentation.

En outre, l'étape de pilotage du système de chauffage de la batterie d'alimentation peut comporter une étape de charge ou de décharge de la batterie d'alimentation pour provoquer par effet joule son réchauffement.

En outre, l'étape de pilotage du système de chauffage de la batterie d'alimentation peut comporter une activation de moyens résistifs internes à la batterie d'alimentation.

L'invention est aussi relative à un véhicule automobile comprenant un groupe motopropulseur comportant un moteur thermique et un moteur électrique relié électriquement à une batterie d'alimentation, ledit véhicule comportant un système de chauffage de la batterie d'alimentation, et un module de pilotage du système de chauffage configuré de sorte à piloter ledit système de chauffage en fonction d'au moins une mesure d'une température représentative du fonctionnement du moteur thermique.

En particulier, le module de pilotage peut comporter les éléments nécessaires à la mise en oeuvre du procédé tel que décrit.

## Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :

- la figure 1 est une vue schématique des différents composants utilisés dans le cadre d'un mode d'exécution du procédé de gestion,
- la figure 2 représente un graphique donnant la puissance de décharge en kW en fonction de l'état de charge (SOC pour « State of Charge » en anglais) d'une batterie d'alimentation d'un moteur électrique de véhicule automobile en fonction de sa température Tbat,
- la figure 3 donne l'évolution d'une température de consigne $T_{Consigne}$ de la batterie d'alimentation en fonction de la température représentative de la température du moteur thermique ici $T_{eau}$,
- la figure 4 illustre les différentes étapes du procédé de gestion,
- les figures 5 et 6 illustrent deux montées en température de la batterie d'alimentation et du moteur thermique selon deux types de conduites différentes en fonction du temps,
- la figure 7 illustre selon un exemple l'évolution de la température représentative de la température du moteur thermique (ici la température de l'eau de refroidissement du moteur thermique) en fonction du temps consécutivement à un démarrage à -20°C,
- la figure 8 illustre, par superposition à la figure 7 l'évolution de la température de consigne associée,
- la figure 9 illustre l'évolution de la température mesurée de la batterie d'alimentation, dite asservie, superposée à l'évolution de la température consigne lorsque le procédé de gestion est mis en oeuvre,
- la figure 10 illustre l'évolution de la température mesurée de la batterie d'alimentation superposée à l'évolution de la température consigne lorsque le procédé de gestion n'est pas mis en oeuvre,
- la figure 11 illustre, dans le cadre de la figure 9 l'évolution de la puissance fournie par le système de chauffage en fonction du temps.

## Description de modes préférentiels de l'invention

Le procédé décrit ci-après diffère notamment de l'art antérieur en ce que l'on va chercher à déterminer une température représentative du fonctionnement du moteur thermique (aussi appelée température représentative de la température du moteur thermique) et que cette température déterminée, notamment par mesure, va influer sur la stratégie de réchauffement de la batterie d'alimentation du moteur électrique.

Le moteur thermique participe à la propulsion du véhicule automobile à partir de l'exploitation d'un carburant tel le gasoil ou l'essence. Le moteur électrique participe à la propulsion du véhicule automobile à partir de l'exploitation d'une batterie d'alimentation du moteur électrique.

Le procédé qui va être décrit ci-après s'applique tout particulièrement à un véhicule automobile hybride dans une phase consécutive au démarrage dans laquelle le moteur thermique et le moteur électrique n'ont pas encore atteint des températures optimales de fonctionnement.

Dans la présente description, par « propulsion du véhicule automobile », on entend une définition au sens large, c'est-à-dire l'apport d'une énergie à un véhicule automobile pour lui permettre de ce mouvoir. En ce sens, la propulsion couvre un véhicule par propulsion arrière et/ou par traction avant.

Comme illustré en figure 1, l'invention est tout particulièrement relative à un procédé de gestion d'un groupe motopropulseur 1 d'un véhicule automobile comportant un moteur thermique 2 et un moteur électrique 3 relié électriquement à une batterie d'alimentation 4. Autrement dit, la batterie d'alimentation 4 permet la mise en fonctionnement du moteur électrique 3 de sorte que ce dernier apporte un couple à des roues du véhicule automobile.

Le procédé de gestion comporte une étape de pilotage d'un système de chauffage 5 de la batterie d'alimentation 4 en fonction d'au moins une mesure d'une température représentative du fonctionnement du moteur thermique 2.

Selon une réalisation particulière, le moteur thermique 2 est associé à une première température de fonctionnement optimale et la batterie d'alimentation 4 est associée à une deuxième température de fonctionnement optimale. Dans ce cadre, l'étape de pilotage est telle qu'elle synchronise la montée en température de la batterie d'alimentation 4 à la montée en température du moteur thermique 2 pour que les première et deuxième températures de fonctionnement optimales soient atteintes en même temps.

Les première et deuxième températures de fonctionnement optimales sont préférentielles différentes. En particulier, la première température de fonctionnement optimale est inférieure à la deuxième température de fonctionnement optimale.

En fait, la montée en température du moteur thermique 3 est automatique du fait de son fonctionnement. Ainsi, le procédé de gestion permet de piloter la montée en température de la batterie d'alimentation 4 en fonction de celle du moteur thermique 2.

L'importance d'une montée en température adaptée d'une batterie d'alimentation 4 du moteur électrique 3 se comprend à partir de l'examen de la figure 2. En effet, on s'aperçoit que plus la température de la batterie d'alimentation 4 est élevée, pour des températures testées de - 20°C, 0°C, 25°C et 45°C plus la puissance disponible à 10 secondes en décharge est importante. En ce sens pour maximiser l'apport du moteur électrique à l'expérience de conduite, il faut que la température de la batterie d'alimentation soit adaptée.

En ce sens, un tel procédé de gestion permet notamment de procurer une expérience de conduite optimisée en permettant aux organes moteurs d'arriver en même temps à leurs conditions de fonctionnement optimales. Ainsi, implicitement, on tient ici compte du mode de conduite du conducteur par exemple choisi entre une conduite souple et une conduite sportive. Notamment, la montée en température du moteur thermique 2 est généralement lente (quelques minutes) voire très lente si le conducteur roule très lentement. Il est donc inutile de chauffer la batterie d'alimentation 4 trop rapidement si la montée en température du moteur thermique 2 est lente. A contrario, si la montée en température du moteur thermique 2 est plus rapide (c'est-à-dire que le conducteur a un mode « sportif» de conduite), il faut accélérer la montée en température de la batterie d'alimentation 4.

De préférence, chaque mesure de la température représentative du fonctionnement du moteur thermique 2 inclut de mesurer la température du liquide de refroidissement du moteur thermique 2. En particulier, la température du liquide de refroidissement qui est mesurée en sortie du moteur thermique 2 présente l'avantage d'être un bon indicateur de la température du moteur thermique 2 lui-même.

En particulier, le procédé de gestion comporte, pour chaque étape de mesure de la température représentative du fonctionnement du moteur thermique 2, une étape d'élaboration d'une température de consigne. Par exemple, pour une température mesurée, il suffit d'interroger une table ou une fonction donnant la température de consigne $T_{Consigne}$ en fonction de la température $T_{eau}$ mesurée représentative du moteur thermique 2. La figure 3 illustre une telle fonction. Par ailleurs, l'étape de pilotage du système de chauffage 5 comporte une étape d'activation du système de chauffage 5 pour faire tendre la température réelle de la batterie d'alimentation 4 vers la température de consigne élaborée. Notamment, on fait tendre la température réelle de la batterie d'alimentation 4 vers la température de consigne si la température réelle de la batterie est inférieure à la température de consigne. On comprend alors que le procédé de gestion s'applique tout particulièrement à un véhicule automobile après son démarrage en période de chauffe.

De manière applicable à tout ce qui a été dit ci-avant, l'étape de pilotage peut comporter une étape de mesure de la température courante de la batterie d'alimentation et une étape de détermination d'une puissance de chauffage du système de chauffage à appliquer en fonction de la température de consigne élaborée et de la température courante mesurée de la batterie d'alimentation 4. Plus particulièrement, en connaissant la température courante mesurée de la batterie d'alimentation 4 et la température de consigne, il est possible de calculer une variation de température souhaitée. A partir de la variation de température souhaitée, et connaissant une constante de régulation donnant une puissance par rapport à des degrés Celsius ou Kelvin, il est possible de déduire la puissance de chauffage désirée.

En particulier, la figure 4 illustre schématiquement la logique du procédé de gestion qui prend en entrée une température représentative du fonctionnement du moteur thermique 2, $T_{eau}$ dans l'exemple illustré, et une température mesurée de la batterie d'alimentation 4, $T_{MesureBatterie}$ dans l'exemple illustré. L'application de la fonction f, permet d'obtenir une température de consigne $T_{Consigne}$. Ensuite, $\varepsilon$ relatif à l'apport de chaleur souhaité est calculé, notamment de la manière suivante :

$$\varepsilon = T_{Consigne} - T_{MesureBatterie}$$

si $\varepsilon$ est positif alors il est détecté un besoin de chauffe de la batterie d'alimentation 4, $\varepsilon$ est alors envoyé à un régulateur 6 qui permet de contrôler de manière idoine la puissance de chauffe du système de chauffage 5.

Selon un exemple particulier dérivé de ce qui a été dit ci-dessus, la pleine puissance de la batterie d'alimentation 4 n'est nécessaire pour un véhicule hybride que lorsque le moteur thermique 2 est considéré comme chaud. Par exemple, le moteur thermique 2 est considéré comme chaud lorsque la température de l'eau de refroidissement à la sortie du moteur thermique 2 est de 15°C. L'objectif consiste alors à synchroniser les performances du moteur thermique et du moteur électrique. Pour cela, il est proposé de synchroniser la température de pleine puissance de la batterie d'alimentation 4 à la température « cible » (évoquée précédemment à 15°C) du moteur thermique 2. Ainsi, lorsque la température d'eau en sortie du moteur thermique 2 dépasse un seuil (exemple : 15 °C) alors le moteur thermique 2 est considéré comme suffisamment chaud pour délivrer une bonne partie de sa puissance. Dans l'exemple, lorsque le véhicule automobile démarre, la température de l'eau de refroidissement et la température de la batterie d'alimentation 4 sont identiques et égales à -20°C. Le moteur thermique 2 est considéré chaud dès que sa température d'eau devient supérieure à 15°C et la batterie d'alimentation 4 est capable de délivrer toute sa puissance dès que sa température dépasse 25°C. Puisque le conducteur, par sa façon de conduire, régit la montée en température du moteur thermique 2, la montée en température de la batterie d'alimentation 4 est pilotée pour que celle-ci atteigne 25°C quand le moteur thermique 2 atteindra 15°C. Il faut noter que cela n'est pas possible avec la solution d'asservissement passif de l'art antérieur mentionnée précédemment. Les figures 5 et 6 illustrent l'évolution des températures de l'eau de refroidissement $T_{eau}$ et de la batterie d'alimentation 4 $T_{batterie}$ selon la mise en oeuvre du procédé de gestion pour une conduite souple (figure 5) dans laquelle les températures optimales sont atteintes au bout de 20 minutes, et pour une conduite sportive (figure 6) dans laquelle les températures optimales sont atteintes au bout de 7 minutes. Dans l'exemple, bien que cela ne soit pas limitatif, il a été choisi d'appliquer une évolution linéaire entre la montée en température de la batterie d'alimentation 4 et la montée en température du moteur thermique 2. Le graphique de la figure 3 montre cette évolution linéaire.

Pour valider le principe donné dans l'exemple d'application ci-dessus, il est possible de poser l'équation suivante :

$$M.Cp.\frac{dT_{batterie}}{dt} = P_{CTP} + (hS)_{ext}.(T_{ext} - T_{batterie}) + RI^2 \quad \text{eq.1}$$

Avec $M.Cp.\frac{dT_{batterie}}{dt}$ l'inertie de la batterie d'alimentation 4, $P_{CTP}$ la puissance de chauffage fournie par le système de chauffage 5 quant il est activé, $(hS)_{ext}$ l'échange thermique entre l'air externe et la batterie d'alimentation 4, $T_{ext}$ la température extérieure, $T_{batterie}$ la température mesurée de la batterie d'alimentation 4 et $RI^2$ la puissance par effet Joule lors du cyclage de la batterie d'alimentation 4 (c'est-à-dire la chaleur que s'apporte la batterie d'alimentation elle-même du fait de son fonctionnement).

Associée à la condition initiale : $T_{batterie}$ (t=0) = -20°C = $T_{initiale}$, la solution de l'équation n°1 est donnée par :

$$T_{batterie} = T_{initiale}.\exp(-t/\tau) + \left(T_{ext} + \frac{P_{CTP} + RI^2}{(hS)_{ext}}\right).(1 - \exp(-t/\tau)) \quad \text{eq. 2}$$

Avec

$$\tau = \frac{M.Cp}{(hS)_{ext}}$$

Sans l'apport système de chauffage, la solution de l'équation n°1 (avec $P_{CTP}$ = 0) aurait été :

$$T_{batterie} = T_{initiale}.\exp(-t/\tau) + \left(T_{ext} + \frac{RI^2}{(hS)_{ext}}\right).(1 - \exp(-t/\tau)) \quad \text{eq. 3}$$

Avec

$$\tau = \frac{M.Cp}{(hS)_{ext}}$$

Il est clair que $\tau$ est fonction du type de batterie, et donc adapté en conséquence.

L'apport du chauffage $\varepsilon$, notamment par CTP (pour « Coefficient Thermique Positif») il peut par exemple s'agir d'une simple résistance, est donc la différence entre la solution n°1 (température avec apport thermique $T_{batterie_avecCTP}$) et la solution n°2 (température sans apport thermique $T_{batterie_sansCTP}$) :

$$T_{batterie_avecCTP} - T_{batterie_sansCTP} = \varepsilon = \left(\frac{P_{CTP}}{(hS)_{ext}}\right).(1 - \exp(-t/\tau)) \qquad \text{eq. 4}$$

$\varepsilon$ représente la variation de température souhaitée évoquée ci-dessus, c'est-à-dire la différence entre la température mesurée de la batterie d'alimentation et la température de consigne évaluée.

Puisque la batterie d'alimentation 4 réagit lentement il est inutile de faire un régulateur rapide. Dans l'exemple d'application nous prenons un temps de régulateur t de 30s (cela signifie que les besoins de puissance chauffe sont réévalués par le système de chauffage toutes les 30s). Toujours dans l'exemple d'application, nous prenons les valeurs suivantes :

- une valeur de constante de temps $\tau$= 619s
- un échange thermique entre l'air externe et la batterie : $(hS)_{ext}$ = 1,319 W/K.

L'apport du chauffage, selon l'équation eq. 4 sera donc

$$T_{batterie_avecCTP} - T_{batterie_sansCTP} = \left(\frac{P_{CTP}}{(hS)_{ext}}\right).(1 - \exp(-t/\tau)) = \left(\frac{P_{CTP}}{1{,}319}\right).(1 - \exp(-30/619)) = P_{CTP}.0{,}0358$$

Soit $= \frac{P_{CTP}}{K_p} = = P_{CTP}.0{,}0358 = \varepsilon$

Avec $\varepsilon$ comme évoqué précédemment la différence entre la température de consigne de la batterie l'alimentation 4 et la température mesurée courante de la batterie d'alimentation 4.

La régulation du système de chauffage 5 mise en oeuvre par l'étape de pilotage peut donc se mettre sous la forme d'un gain proportionnel $K_p$ :

$$P_{CTP} = K_p.\ \varepsilon$$

Avec

$$K_p = \frac{1}{0.0358} = 27{,}88\ \text{W / K}$$

On sait donc comment en fonction de $\varepsilon$ piloter la puissance de chauffe à apporter à la batterie d'alimentation 4 par le système de chauffage 5.

Les équations données ci-dessus peuvent être appliquées à tout type de batteries d'alimentation lors de leur caractérisation pour trouver la valeur $K_p$ correspondante.

Il est à présent décrit un exemple concret pour lequel le procédé de gestion est mis en oeuvre. La figure 7 illustre l'influence du fonctionnement du véhicule automobile sur la température de l'eau du moteur thermique 2 pour une période de 30 minutes après démarrage du véhicule garé à -20°C (il en résulte que l'eau du moteur thermique est à - 20°C au moment du démarrage). La figure 8 illustre pour la courbe de la figure 7 l'évolution de la température de consigne souhaitée. La figure 9 montre l'évolution de la température réelle de la batterie d'alimentation 4 en fonction de la température de consigne dans le cadre où le procédé de gestion est appliqué, alors que la figure 10 montre l'évolution de la température réelle de la batterie d'alimentation lorsque le procédé de gestion n'est pas appliqué. Il résulte clairement que sans apport de température, la batterie d'alimentation 4 ne peut fournir toute sa puissance même au bout d'une phase de roulage de 30 minutes. En complément, la figure 11 illustre au cours du temps l'apport en W du système de chauffage 5 pour faire tendre la température réelle de la batterie d'alimentation 4 vers celle de consigne.

De manière générale, l'étape de pilotage du système de chauffage 5 de la batterie d'alimentation 4 comporte une étape de prélèvement de calories sur un organe du véhicule automobile producteur de chaleur du fait du fonctionnement du moteur thermique et une étape de restitution d'au moins une partie des calories prélevées à la batterie d'alimentation 4. Il est évident que cette étape de prélèvement de calorie est mise en oeuvre lorsque la température de consigne élaborée est supérieure à la température mesurée de la batterie d'alimentation 4, autrement dit lorsque l'on détecte un besoin de chauffage de la batterie d'alimentation 4. En particulier, l'étape de prélèvement de calories et l'étape de restitution de ladite au moins une partie des calories utilisent un élément de couplage thermique reliant ledit organe producteur de chaleur à la batterie d'alimentation 4.

Généralement, pour optimiser le fonctionnement du procédé de gestion, à chaque fois qu'une température de consigne est élaborée, il est mesuré une température de la batterie d'alimentation 4 pour avoir une vision adaptée à un même instant temporel.

L'organe du véhicule automobile producteur de chaleur du fait du fonctionnement du moteur thermique peut, par exemple, être choisi parmi un échangeur de chaleur, une ligne d'échappement du véhicule automobile, un circuit d'eau notamment dans le cadre d'un moteur THP (acronyme pour « Turbo High Pressure » en anglais), etc.

Alternativement ou en combinaison avec l'organe producteur de chaleur, la montée en température de la batterie d'alimentation 4 peut être réalisée en stimulant ladite batterie d'alimentation 4 (cycles permettant d'augmenter sa résistance interne). Autrement dit, l'étape de pilotage du système de chauffage de la batterie d'alimentation 4 peut comporter une étape de charge ou de décharge de la batterie d'alimentation 4 pour provoquer par effet joule son réchauffement. Cette utilisation (charge ou décharge de la batterie d'alimentation) peut être mise en oeuvre en appliquant une loi de gestion d'énergie particulière, par exemple en augmentant volontairement l'apport du couple du moteur électrique 3 dans le cadre de la mise en mouvement du véhicule pour solliciter la batterie d'alimentation 4.

Alternativement ou en combinaison avec l'organe producteur de chaleur et/ou la stimulation de la batterie d'alimentation 4, l'étape de pilotage du système de chauffage 5 de la batterie d'alimentation 4 comporte une activation de moyens résistifs internes à la batterie d'alimentation 4.

Le procédé décrit ci-avant permet, en liant la montée en température du moteur thermique à celle de la batterie par mesure(s) de température(s) représentative(s) de celle(s) du moteur thermique, de contrôler au mieux l'apport de calories à la batterie en fonction de l'utilisation du véhicule. Par exemple, en cas d'une courte durée d'utilisation pour laquelle le moteur thermique sera resté froid, la montée en température de la batterie pourra être limitée car non-utile à la conduite. En ce sens, il est possible de réduire la consommation du véhicule et donc de favoriser l'autonomie de la batterie alimentant le moteur électrique.

L'invention est bien entendue aussi relative à un véhicule automobile comprenant un groupe motopropulseur comportant un moteur thermique 2 et un moteur électrique relié électriquement à une batterie d'alimentation 4, ledit véhicule comportant un système de chauffage 5 de la batterie d'alimentation 4. Le véhicule comporte un module de pilotage 7 du système de chauffage configuré de sorte à piloter ledit système de chauffage en fonction d'au moins une mesure d'une température représentative du fonctionnement du moteur thermique.

Notamment, le module de pilotage comporte les éléments nécessaires à la mise en oeuvre du procédé de gestion tel que décrit. Pour cela, le module de pilotage peut comporter un programme informatique comprenant les moyens de code nécessaire au déroulement des étapes du programme de gestion. En outre, le module de pilotage peut comporter des entrées reliées à des capteurs, notamment un capteur de température de la batterie, un capteur d'une température représentative de la température du moteur thermique et au moins une sortie apte à transmettre au système de chauffage des instructions pour la mise en oeuvre ou non du chauffage de la batterie d'alimentation.

## Revendications

1. Procédé de gestion d'un groupe motopropulseur (1) d'un véhicule automobile comportant un moteur thermique (2) et un moteur électrique (3) relié électriquement à une batterie d'alimentation (4), **caractérisé en ce que**, le moteur thermique (2) étant associé à une première température de fonctionnement optimale et la batterie d'alimentation (4) étant associée à une deuxième température de fonctionnement optimale, il comporte une étape de pilotage d'un système de chauffage (5) de la batterie d'alimentation (4) telle qu'elle synchronise la montée en température de la batterie d'alimentation (4) à la montée en température du moteur thermique (2) pour que les première et deuxième températures de fonctionnement optimales soient atteintes en même temps.

2. Procédé selon l'une quelconque des revendications précédentes, **caractérisé en ce qu'**il comporte, pour chaque étape de mesure de la température représentative du fonctionnement du moteur thermique (2), une étape d'élaboration d'une température de consigne, et **en ce que** l'étape de pilotage du système de chauffage (5) comporte une étape d'activation du système de chauffage (5) pour faire tendre la température réelle de la batterie d'alimentation (4) vers la température de consigne élaborée, notamment si la température réelle de la batterie est inférieure à la température de consigne.

3. Procédé selon la revendication précédente, **caractérisé en ce que** l'étape de pilotage comporte une étape de mesure de la température courante de la batterie d'alimentation (4) et une étape de détermination d'une puissance de chauffage du système de chauffage à appliquer en fonction de la température de consigne élaborée et de la température courante mesurée de la batterie d'alimentation (4).

4. Procédé selon l'une des revendications précédentes, **caractérisé en ce que** chaque mesure de la température représentative du fonctionnement du moteur thermique (2) inclut de mesurer la température du liquide de refroidissement du moteur thermique (2).

5. Procédé selon l'une quelconque des revendications précédentes, **caractérisé en ce que** l'étape de pilotage du système de chauffage (5) de la batterie d'alimentation (4) comporte une étape de prélèvement de calories sur un organe du véhicule automobile producteur de chaleur du fait du fonctionnement du moteur thermique (2) et une étape de restitution d'au moins une partie des calories prélevées à la batterie d'alimentation (4).

6. Procédé selon la revendication précédente, **caractérisé en ce que** l'étape de prélèvement de calories et l'étape de restitution de ladite au moins une partie des calories utilisent un élément de couplage thermique reliant ledit organe producteur de chaleur à la batterie d'alimentation (4).

7. Procédé selon l'une des revendications 1 à 6, **caractérisé en ce que** l'étape de pilotage du système de chauffage de la batterie d'alimentation (4) comporte une étape de charge ou de décharge de la batterie d'alimentation (4) pour provoquer par effet joule son réchauffement.

8. Procédé selon l'une des revendications 1 à 7, **caractérisé en ce que** l'étape de pilotage du système de chauffage (5) de la batterie d'alimentation (4) comporte une activation de moyens résistifs internes à la batterie d'alimentation (4).

9. Véhicule automobile comprenant un groupe motopropulseur comportant un moteur thermique (2) et un moteur électrique (3) relié électriquement à une batterie d'alimentation (4), ledit véhicule comportant un système de chauffage (5) de la batterie d'alimentation (4), **caractérisé en ce qu'**il comporte un module de pilotage (7) du système de chauffage (5) comportant les éléments nécessaires à la mise en oeuvre du procédé selon l'une quelconque des revendications 1 à 8.

## Patentansprüche

1. Verfahren zur Steuerung der Antriebsgruppe (1) eines Kraftfahrzeugs umfassend einen Verbrennungsmotor (2) und einen Elektromotor (3), der elektrisch mit einer Versorgungsbatterie (4) verbunden ist, **dadurch gekennzeichnet, dass**, während der Verbrennungsmotor (2) mit einer ersten optimalen Betriebstemperatur assoziiert ist und die Versorgungsbatterie (4) mit einer zweiten optimalen Betriebstemperatur assoziiert ist, das Verfahren einen Schritt zur Steuerung eines Aufheizsystems (5) der Versorgungsbatterie (4) in der Form umfasst, dass dadurch der Anstieg der Temperatur der Versorgungsbatterie (4) mit dem Anstieg der Temperatur des Verbrennungsmotors (2) synchronisiert wird, damit die erste und zweite optimale Betriebstemperatur gleichzeitig erreicht werden.

2. Verfahren nach einem der vorhergehenden Ansprüche, **dadurch gekennzeichnet, dass** es für jeden Schritt zur Messung der repräsentativen Betriebstemperatur des Verbrennungsmotors (2) einen Schritt zum Erstellen einer Solltemperatur umfasst und **dadurch gekennzeichnet, dass** der Schritt zur Steuerung des Aufheizsystems (5) einen Schritt zur Aktivierung des Aufheizsystems (5) umfasst, um die Isttemperatur der Versorgungsbatterie (4) an die erstellte Solltemperatur anzupassen, insbesondere wenn die Isttemperatur der Batterie niedriger als die Solltemperatur ist.

3. Verfahren nach dem vorhergehenden Anspruch, **dadurch gekennzeichnet, dass** der Schritt zur Steuerung einen Schritt zur Messung der aktuellen Temperatur der Versorgungsbatterie (4) sowie einen Schritt zur Ermittlung einer Heizleistung des Aufheizsystems umfasst, die in Abhängigkeit der erstellten Solltemperatur und der gemessenen aktuellen Temperatur der Versorgungsbatterie (4) anzuwenden ist.

4. Verfahren nach einem der vorhergehenden Ansprüche, **dadurch gekennzeichnet, dass** jede Messung der repräsentativen Betriebstemperatur des Verbrennungsmotors (2) die Messung der Temperatur der Kühlflüssigkeit des Verbrennungsmotors (2) umfasst.

5. Verfahren nach einem der vorhergehenden Ansprüche, **dadurch gekennzeichnet, dass** der Schritt zur Steuerung des Aufheizsystems (5) der Versorgungsbatterie (4) einen Schritt der Entnahme von Kalorien aus einer Fahrzeugkomponente, die durch den Betrieb des Verbrennungsmotors (2) Wärme erzeugt, sowie einen Schritt zur Wiederherstellung mindestens eines Teils der entnommenen Kalorien für die Versorgungsbatterie (4) umfasst.

6. Verfahren nach dem vorhergehenden Anspruch, **dadurch gekennzeichnet, dass** der Schritt der Entnahme von Kalorien und der Schritt der Wiederherstellung des mindestens einen Teils von Kalorien ein thermisches Koppungselement verwenden, das die wärmeerzeugende Komponente mit der Versorgungsbatterie (4) verbindet.

7. Verfahren nach einem der Ansprüche 1 bis 6, **dadurch gekennzeichnet, dass** der Schritt zur Steuerung des Aufheizsystems der Versorgungsbatterie (4) einen Schritt zum Laden oder Entladen der Versorgungsbatterie (4) umfasst, um über den Joule-Effekt deren Aufheizen zu veranlassen.

8. Verfahren nach einem der Ansprüche 1 bis 7, **dadurch gekennzeichnet, dass** der Schritt zur Steuerung des Aufheizsystems (5) der Versorgungsbatterie (4) eine Aktivierung der resistiven Mittel in der Versorgungsbatterie (4) umfasst.

9. Kraftfahrzeug umfassend eine Antriebsgruppe mit einem Verbrennungsmotor (2) und einem Elektromotor (3), der elektrisch mit einer Versorgungsbatterie (4) verbunden ist, wobei das Fahrzeug ein Aufheizsystem (5) der Versorgungsbatterie (4) umfasst, **dadurch gekennzeichnet, dass** es ein Modul zur Steuerung (7) des Aufheizsystems (5) umfasst, das die zur Umsetzung des Verfahrens nach einem der vorhergehenden Ansprüche 1 bis 8 erforderlichen Elemente enthält.

**Claims**

1. Method for managing a power train (1) of a motor vehicle comprising a heat engine (2) and an electric motor (3) electrically linked to a power battery (4), **characterized in that**, the heat engine (2) being associated with a first optimal operating temperature and the power battery (4) being associated with a second optimal operating temperature, it comprises a step of controlling a heating system (5) for heating the power battery (4) such that the control step synchronizes the temperature rise of the power battery (4) with the temperature rise of the heat engine (2) for the first and second optimal operating temperatures to be reached at the same time.

2. Method according to any one of the preceding claims, **characterized in that** it comprises, for each step of measurement of the temperature representative of the operation of the heat engine (2), a step of generation of a setpoint temperature, and **in that** the step of controlling the heating system (5) comprises a step of activation of the heating system (5) to make the real temperature of the power battery (4) tend toward the generated setpoint temperature, notably if the real temperature of the battery is lower than the setpoint temperature.

3. Method according to the preceding claim, **characterized in that** the control step comprises a step of measurement of the current temperature of the power battery (4) and a step of determination of a heating power of the heating system to be applied according to the generated setpoint temperature and the measured current temperature of the power battery (4).

4. Method according to one of the preceding claims, **characterized in that** each measurement of the temperature representative of the operation of the heat engine (2) includes measuring the temperature of the coolant of the heat engine (2).

5. Method according to any one of the preceding claims, **characterized in that** the step of controlling the heating system (5) of the power battery (4) comprises a step of taking calories from a member of the motor vehicle producing heat because of the operation of the heat engine (2) and a step of restoration of at least a part of the calories taken to the power battery (4).

6. Method according to the preceding claim, **characterized in that** the step of taking calories and the step of restoration of said at least a part of the calories use a thermal coupling element linking said heat-producing member to the power battery (4).

7. Method according to one of Claims 1 to 6, **characterized in that** the step of controlling the heating system of the power battery (4) comprises a step of charging or discharging the power battery (4) to provoke, by Joule effect, the reheating thereof.

**8.** Method according to one of Claims 1 to 7, **characterized in that** the step of controlling the heating system (5) of the power battery (4) comprises an activation of resistive means internal to the power battery (4).

**9.** Motor vehicle comprising a power train comprising a heat engine (2) and an electric motor (3) linked electrically to a power battery (4), said vehicle comprising a heating system (5) for heating the power battery (4), **characterized in that** it comprises a module (7) for controlling the heating system (5) comprising the elements necessary to the implementation of the method according to any one of Claims 1 to 8.

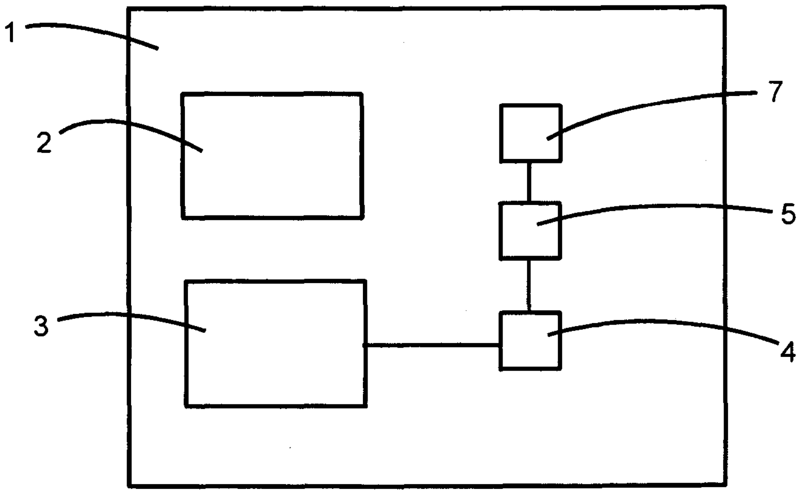


FIG.1

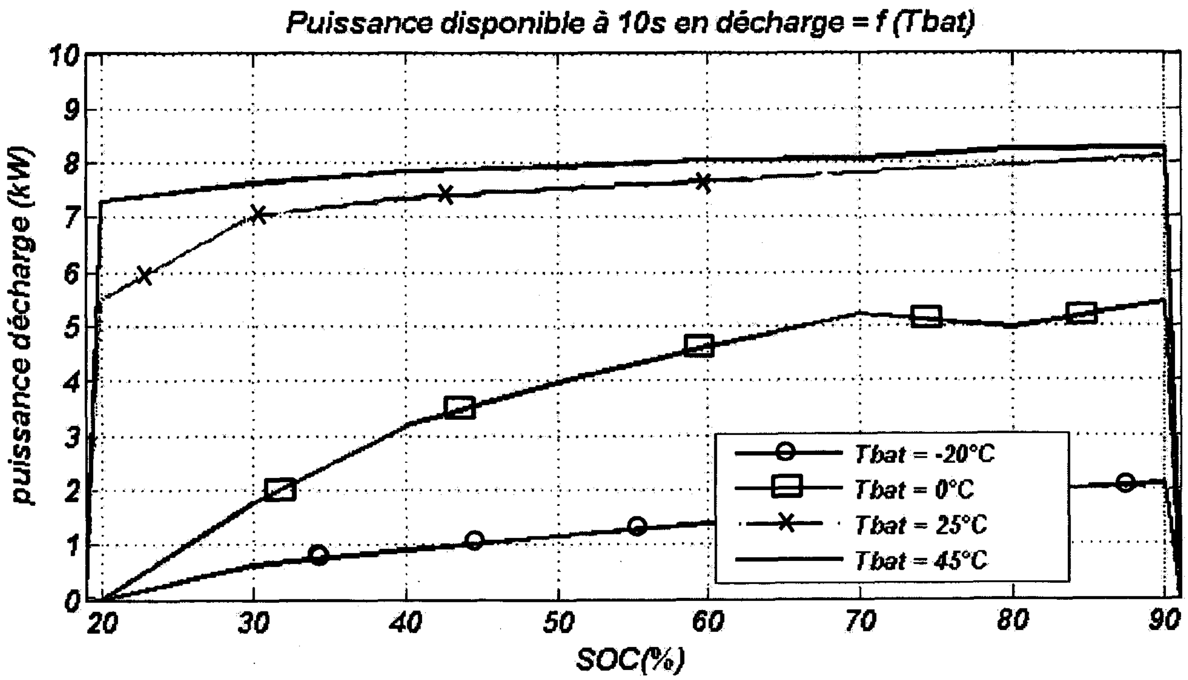


FIG.2

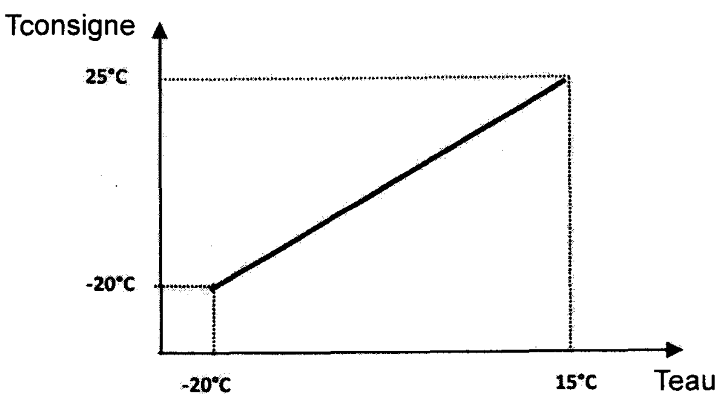


FIG.3

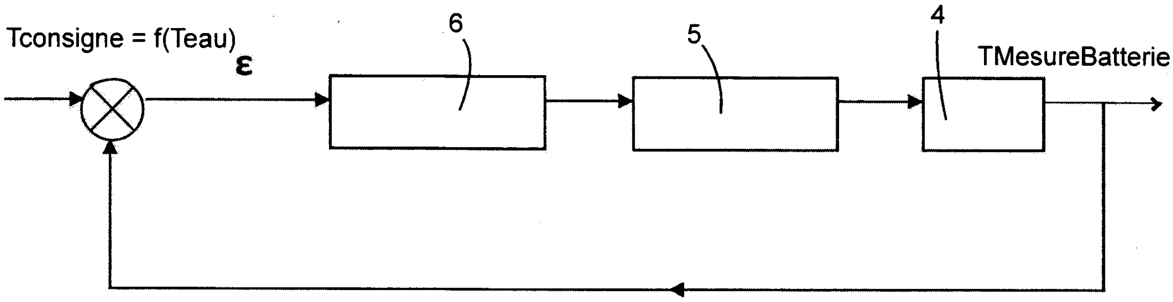


FIG.4

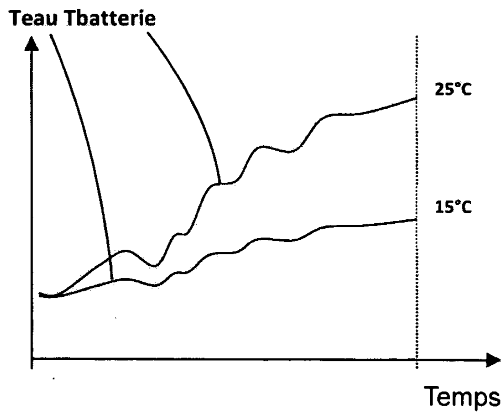


FIG.5

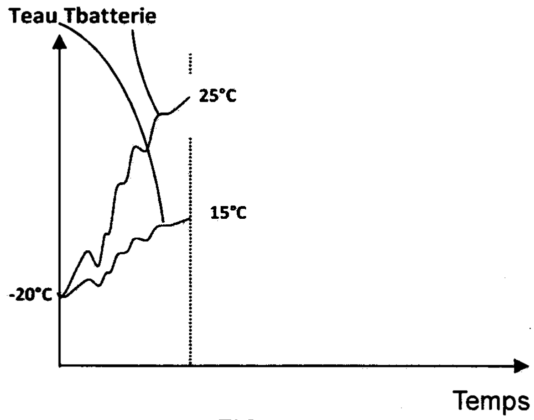


FIG.6

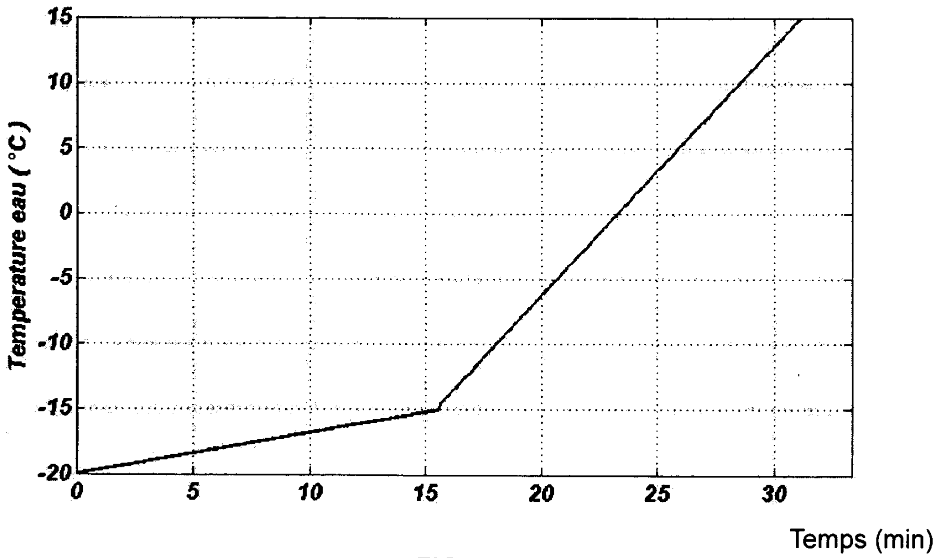


FIG.7

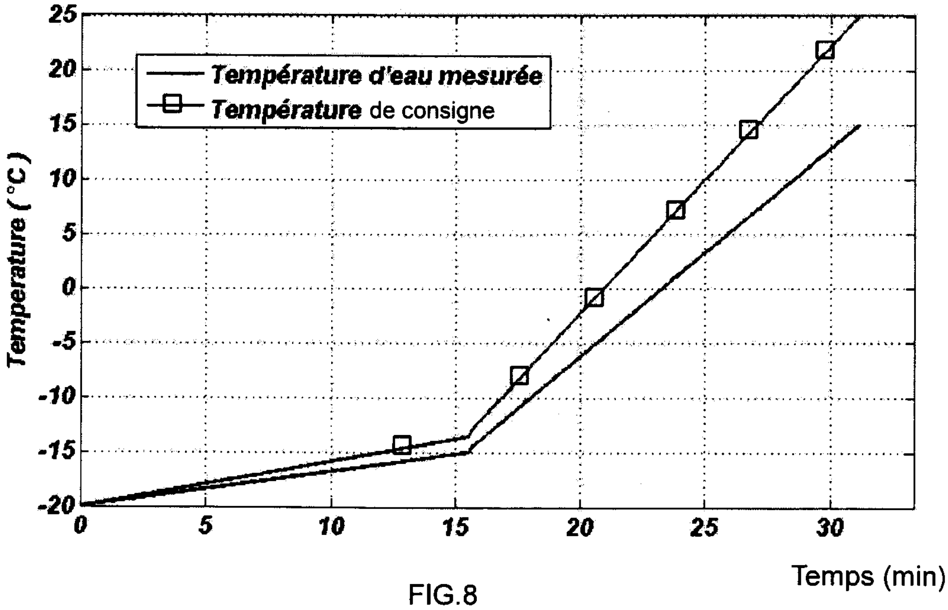


FIG.8

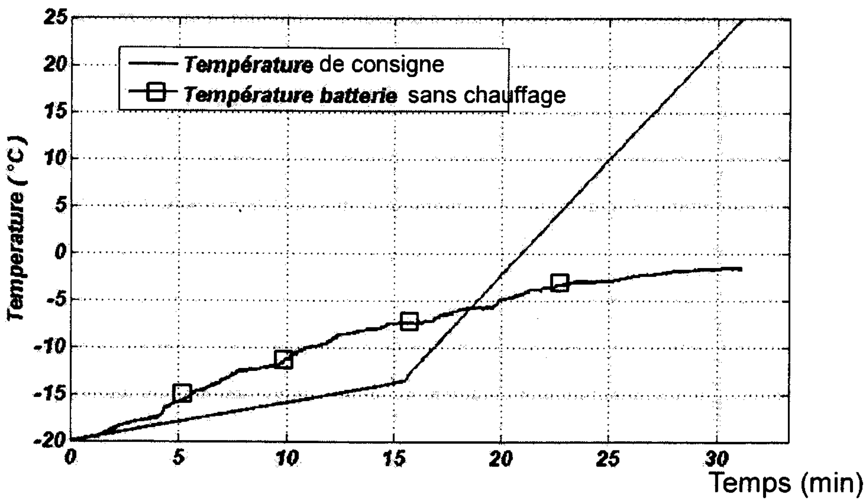


FIG.10

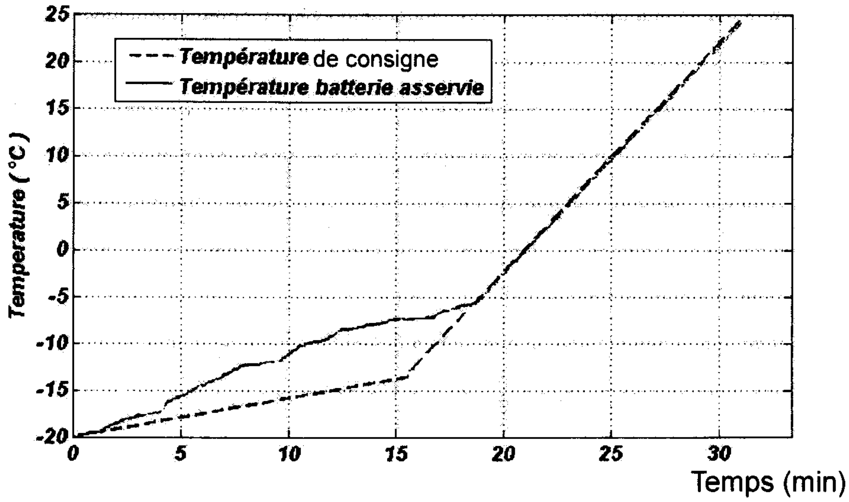


FIG.9

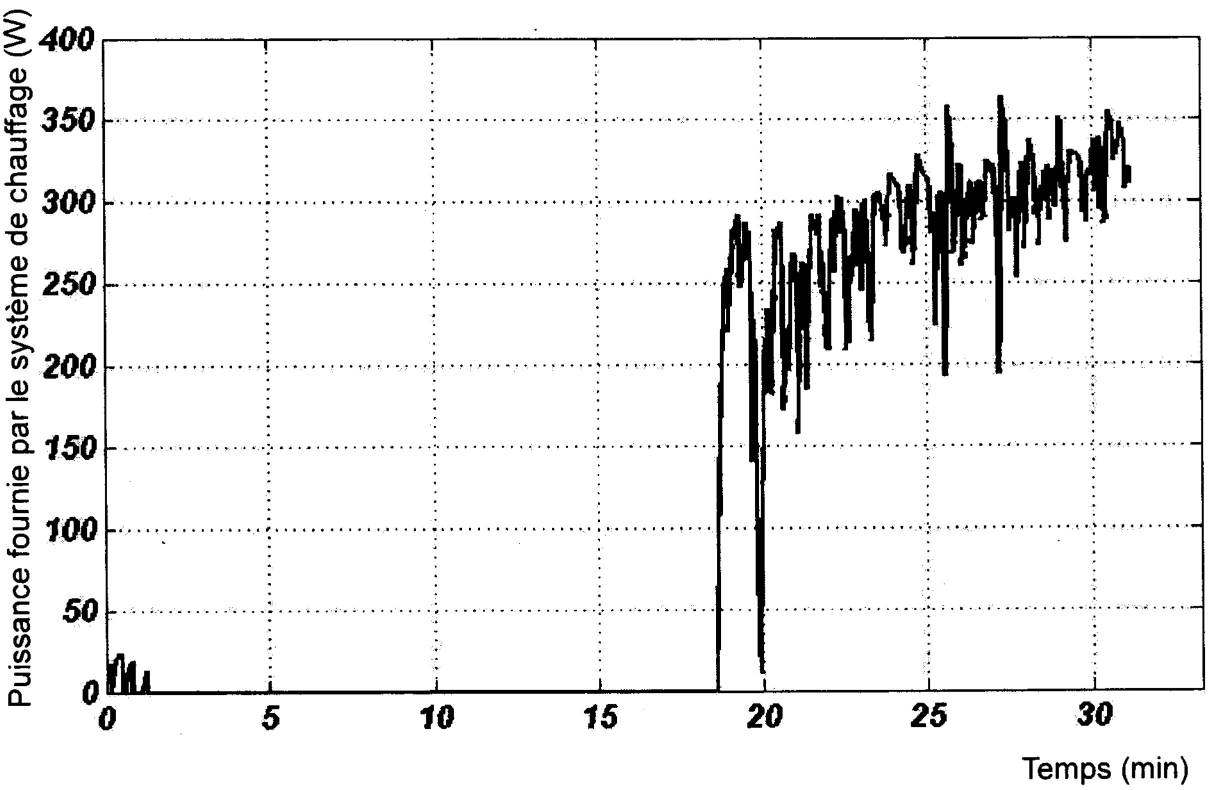
Puissance fournie par le système de chauffage (W)
400
350
300
250
200
150
100
50
0
0
5
10
15
20
25
30
Temps (min)

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1065354 A
- GB 2509308 A